# EUROPEAN PATENT APPLICATION

(11) **EP 4 411 852 A1**
(43) Date of publication of application: **07.08.2024**
(21) Application number: 22875470.1
(22) Date of filing: 15.06.2022
(51) Int. Cl.: H01M 4/13, H01M 4/131, H01M 4/139, H01M 4/1391, H01M 4/505, H01M 4/525, H01M 4/62

(54) **ELECTRODE FOR SECONDARY BATTERIES, METHOD FOR PRODUCING ELECTRODE FOR SECONDARY BATTERIES, AND SECONDARY BATTERY**

(30) Priority: 30.09.2021 JP 2021161039
(71) Applicant: Panasonic Intellectual Property Management Co., Ltd., Osaka-shi, Osaka 540-6207 (JP)
(72) Inventor: ESAKI, Shogo, Kadoma-shi, Osaka 571-0057 (JP); NATSUI, Ryuichi, Kadoma-shi, Osaka 571-0057 (JP); NAKURA, Kensuke, Kadoma-shi, Osaka 571-0057 (JP)
(74) Representative: Novagraaf International SA
(86) International application number: PCT/JP2022/023963
(87) International publication number: WO 2023/053591

(57) **Abstract**

An electrode for secondary batteries according to one embodiment of the present disclosure is provided with a collector and a mixture layer that is arranged on the collector, and is characterized in that: the mixture layer contains an electrode active material that comprises a metal element, a water-insoluble additive and a water-soluble additive; the water-soluble additive contains a polysaccharide; and the particle diameter of the polysaccharide is larger than the particle diameter of the electrode active material.

## Description

### TECHNICAL FIELD

The present disclosure relates to an electrode for a secondary battery, a method for producing an electrode for a secondary battery, and a secondary battery.

### BACKGROUND

A secondary battery such as a lithium ion secondary battery is used as a drive power source for a mobile information terminal such as a mobile phone or a notebook computer, or used as a drive power source for an electric vehicle (EV), a hybrid electric vehicle (HEV), or the like.

As a positive electrode active material of the lithium ion secondary battery, a Li-containing transition metal oxide containing a transition metal such as nickel, cobalt, or manganese is used. In addition, as a negative electrode active material of the lithium ion secondary battery, a carbon material or the like is generally used, but a metal-containing compound such as lithium titanate or the like may be used in some cases.

When charging and discharging of the secondary battery are repeated, for example, the transition metal in the positive electrode active material may be eluted and precipitated on a negative electrode or may be precipitated on a separator between the positive electrode and the negative electrode. In addition, for example, also in a case where a metal-containing compound is used as the negative electrode active material, a metal in the metal-containing compound may be eluted and precipitated on the negative electrode or precipitated on the separator. As such, when the metal component is eluted from the electrode active material containing a metal element, charge and discharge cycle characteristics of the secondary battery may be deteriorated.

### CITATION LIST

### PATENT LITERATURES

Patent Literature 1: JP 2003-297343 A
Patent Literature 2: JP 2007-234277 A

### NON PATENT LITERATURE

Non Patent Literature 1: Shi-Gang Sun, Electrochimica Acta, 351, 136401(2020)

### SUMMARY

### TECHNICAL PROBLEM

Therefore, an object of the present disclosure is to provide an electrode for a secondary battery, a method for producing an electrode for a secondary battery, and a secondary battery that can suppress deterioration of charge and discharge cycle characteristics of the secondary battery.

### SOLUTION TO PROBLEM

According to an aspect of the present disclosure, an electrode for a secondary battery includes: a current collector; and a mixture layer provided on the current collector, in which the mixture layer contains an electrode active material containing a metal element, a water-insoluble additive, and a water-soluble additive, the water-soluble additive contains a polysaccharide, and a particle diameter of the polysaccharide is larger than a particle diameter of the electrode active material.

In addition, according to an aspect of the present disclosure, a method for producing an electrode for a secondary battery includes: kneading an electrode active material containing a metal element, a water-insoluble additive, and a water-soluble additive containing a polysaccharide having a particle diameter larger than that of the electrode active material in a non-aqueous solvent to prepare a paste; and applying the paste to a current collector to form a mixture layer.

In addition, according to an aspect of the present disclosure, a secondary battery includes a positive electrode and a negative electrode, in which at least one of the positive electrode and the negative electrode is the electrode for a secondary battery.

### ADVANTAGEOUS EFFECTS OF INVENTION

According to the present disclosure, it is possible to suppress the deterioration of the charge and discharge cycle characteristics of the secondary battery.

### BRIEF DESCRIPTION OF DRAWINGS

FIG. 1 is a sectional view of a secondary battery of an example of an embodiment.
FIG. 2 illustrates an SEM image of a surface of a positive electrode used in Example 2.
FIG. 3 is an SEM image showing a dried product of Comparative Example 2.

### DESCRIPTION OF EMBODIMENTS

Hereinafter, embodiments of a negative electrode for a secondary battery and a secondary battery according to the present disclosure will be described in detail with reference to the drawings.

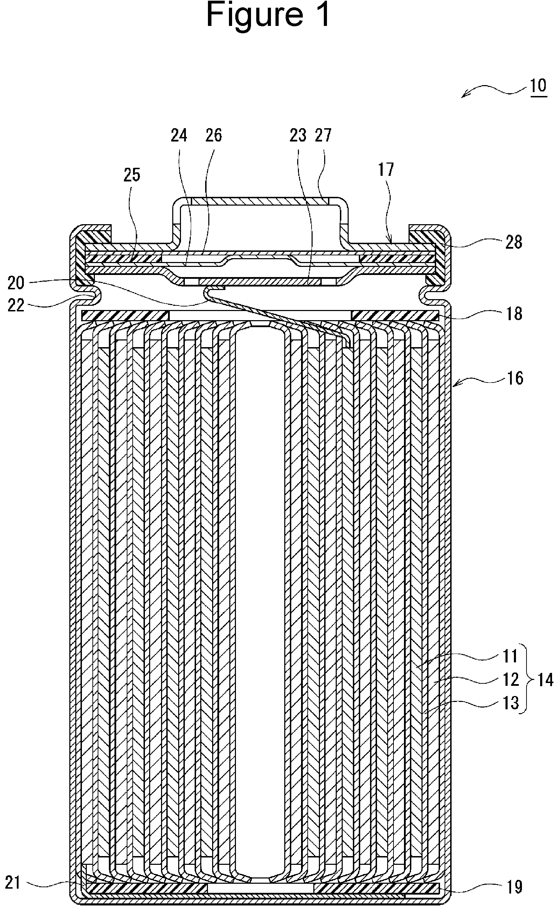

FIG. 1 is a cross-sectional view of a secondary battery as an example of an embodiment. A secondary battery 10 illustrated in FIG. 1 includes a wound electrode assembly 14 in which a positive electrode 11 and a negative electrode 12 are wound with a separator 13 interposed between the positive electrode and the negative electrode, an electrolytic solution, insulating plates 18 and 19 disposed on upper and lower sides of the electrode assembly 14, respectively, and a battery case housing the members and including a case body 16 and a sealing assembly 17. Note that, instead of the wound electrode assembly 14, another form of an electrode assembly such as a stacked electrode assembly in which a positive electrode and a negative electrode are alternately stacked with a separator interposed therebetween may be applied. In addition, examples of the battery case include a metal case having a cylindrical shape, a square shape, a coin shape, a button shape, or the like, and a resin case formed by laminating resin sheets (so-called laminate type resin case).

The case body 16 is, for example, a bottomed cylindrical metal container. A gasket 28 is provided between the case body 16 and the sealing assembly 17 to secure a sealing property of the inside of the battery. The case body 16 has, for example, a projecting portion 22 in which a part of a side part thereof projects inside for supporting the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are stacked in this order from the electrode assembly 14 side. Each member constituting the sealing assembly 17 has, for example, a disk shape or a ring shape, and the respective members except for the insulating member 25 are electrically connected to each other. The lower vent member 24 and the upper vent member 26 are connected to each other at the respective central parts thereof, and the insulating member 25 is interposed between the respective circumferential parts of the vent members 24 and 26. When the internal pressure of the secondary battery 10 is increased by heat generation due to an internal short circuit or the like, for example, the lower vent member 24 is deformed so as to push the upper vent member 26 up toward the cap 27 side and is broken, and thus, a current pathway between the lower vent member 24 and the upper vent member 26 is cut off. When the internal pressure further increases, the upper vent member 26 breaks, and gas is discharged from an opening of the cap 27.

In the secondary battery 10 illustrated in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to a lower surface of the filter 23 that is a bottom plate of the sealing assembly 17 by welding or the like, and the cap 27 that is a top plate of the sealing assembly 17 electrically connected to the filter 23 becomes a positive electrode terminal. The negative electrode lead 21 is connected to the inner surface of the bottom of the case body 16 by welding or the like, and the case body 16 serves as a negative electrode terminal.

The electrolytic solution may be an aqueous electrolytic solution, but is preferably a non-aqueous electrolytic solution containing a non-aqueous solvent and an electrolyte salt dissolved in the non-aqueous solvent. Examples of the non-aqueous solvent include esters, ethers, nitriles, amides, and mixtures of two or more of them. The non-aqueous solvent may contain a halogen-substituted product in which at least a part of hydrogen in a solvent described above is substituted with a halogen atom such as fluorine. Examples of the electrolyte salt include lithium salts such as LiPF₆.

For example, a porous sheet having an ion permeation property and an insulation property is used for the separator 13. Specific examples of the porous sheet include fine porous thin films, woven fabrics, and nonwoven fabrics. As a material of the separator 13, polyolefin such as polyethylene and polypropylene, cellulose, and the like are suitable. The separator 13 may have a single-layered structure or a multilayered structure. On the surface of the separator, a heat-resistant layer or the like may be formed.

Hereinafter, the electrode for a secondary battery according to the present embodiment will be described. The electrode for a secondary battery according to the present embodiment is applied to at least one of the positive electrode 11 and the negative electrode 12.

The electrode for a secondary battery includes a current collector and a mixture layer provided on the current collector. In a case where the electrode for a secondary battery is applied to the positive electrode 11, the current collector is a positive electrode current collector, for example, a foil of a metal stable in a potential range of the positive electrode 11, such as aluminum, a film in which the metal is disposed on a surface layer, or the like. In addition, in a case where the electrode for a secondary battery is applied to the negative electrode 12, the current collector is a negative electrode current collector, for example, a foil of a metal stable in a potential range of the negative electrode 12, such as copper, a film in which the metal is disposed on a surface layer, or the like.

The mixture layer of the electrode for a secondary battery contains an electrode active material containing a metal element, a water-insoluble additive, and a water-soluble additive. In addition, the mixture layer contains a conductive agent and the like, if necessary.

The water-insoluble additive includes, for example, a water-insoluble binder used for binding particles of an active material, a conductive agent, or the like, adhesion between the mixture layer and the current collector, or the like. Examples of the water-insoluble binder include a fluorine-based resin such as polytetrafluoroethylene (PTFE) or polyvinylidene fluoride (PVdF), polyacrylonitrile (PAN), polyimide, an acrylic resin, and a polyolefin. The water-insoluble binder is preferably a fluorine-based resin, and more preferably polyvinylidene fluoride (PVdF) in terms of a binding property and the like. Examples of the water-insoluble additive include a filler in addition to the water-insoluble binder.

The water-soluble additive contains a polysaccharide. The polysaccharide can capture a metal component eluted from the electrode active material by repeating charging and discharging of the secondary battery. Examples of the polysaccharide include a polysaccharide having a carboxy group such as xanthan gum, gum arabic, carboxymethyl cellulose, or pectin, a polysaccharide having a sulfone group such as carrageenan, guar gum, tamarind seed gum, locust bean gum, pullulan, psyllium, hyaluronic acid, and chitosan. Among these polysaccharides, guar gum, for example, locust bean gum, a polysaccharide having a carboxy group, and a polysaccharide having a sulfone group are preferable, a polysaccharide having a carboxy group and a polysaccharide having a sulfone group are more preferable, and gum arabic and carrageenan are particularly preferable, in terms of a high ability to capture the metal component eluted from the electrode active material.

Guar gum (GG) has a skeleton having a side chain of one molecule of galactose in two molecules of mannose linearly bonded, and is represented by the following structural formula.

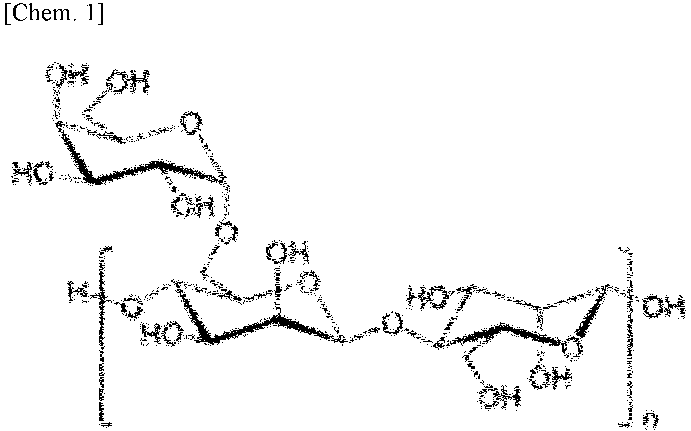

Locust bean gum (LBG) has a skeleton having a side chain of one molecule of galactose in four molecules of mannose linearly bonded, and is represented by the following structural formula.

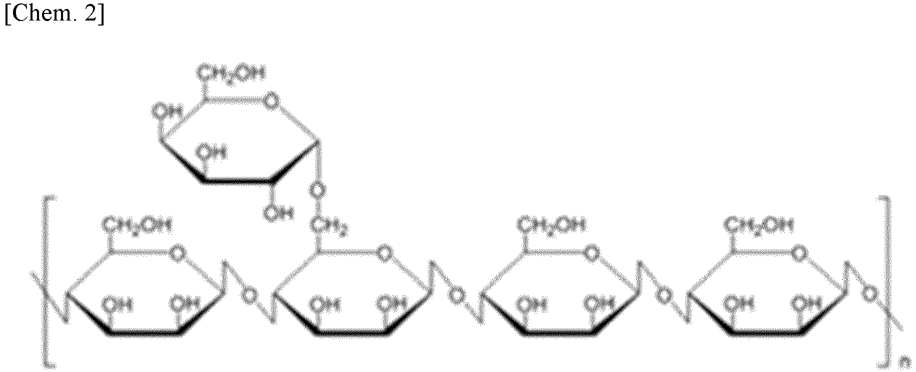

Xanthan gum (XG) consists of repeating units of two molecules of glucose, two molecules of mannose, and gluconic acid, and is represented by the following structural formula.

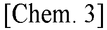

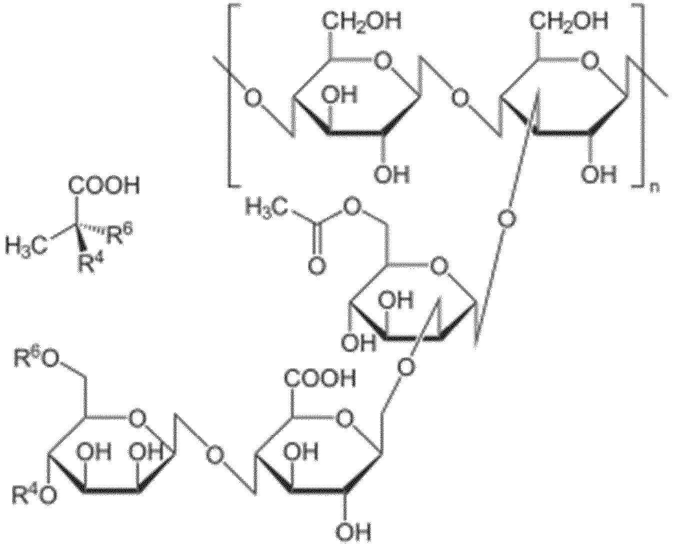

Gum arabic (GA) is represented by the following structural formula.

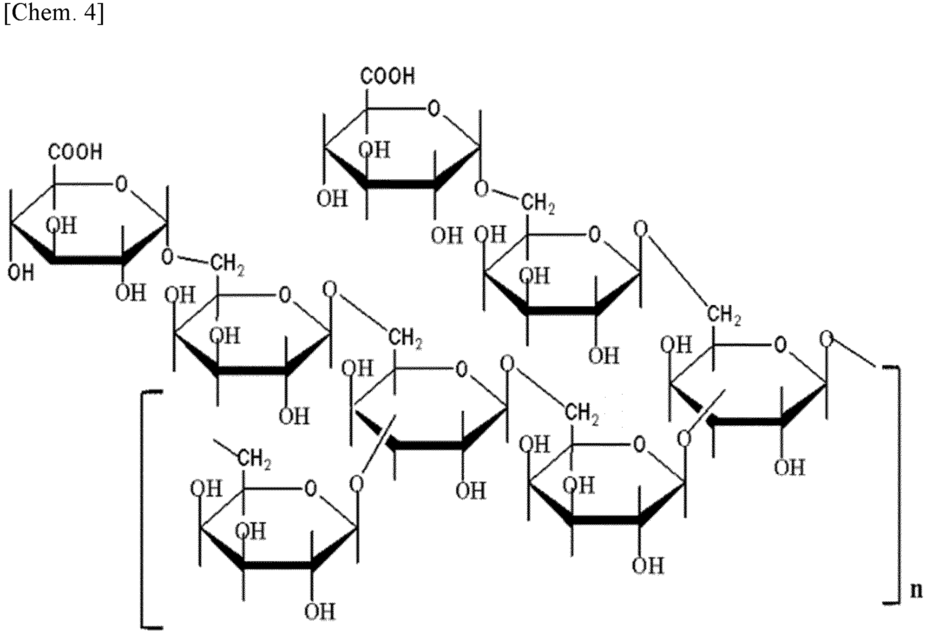

Examples of the carboxymethyl cellulose (CMC) include carboxymethyl cellulose of an ammonium salt type, and the carboxymethyl cellulose (CMC) is represented by the following structural formula.

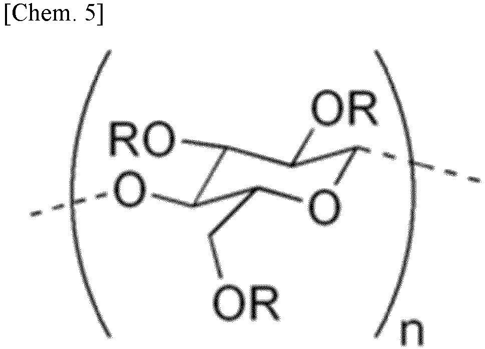

R = H or CH₂CO₂H

Examples of the carrageenan include kappa-type carrageenan (k-Car) and iota-type carrageenan (i-Car), and the carrageenan is represented by the following structural formula.

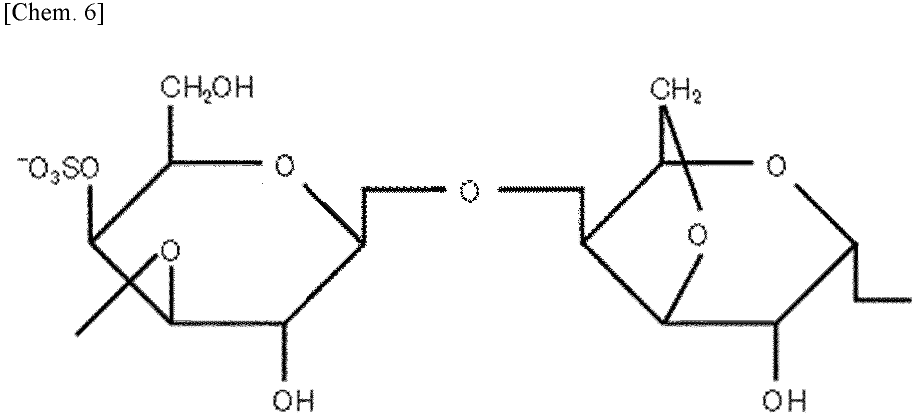

Kappa-type carrageenan 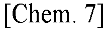 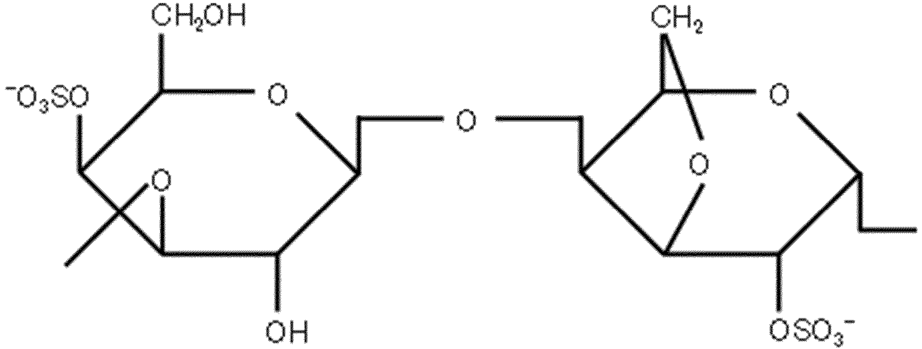 Iota-type carrageenan

A particle diameter of the polysaccharide is larger than a particle diameter of the electrode active material. When the polysaccharide having the particle diameter larger than that of the electrode active material is distributed in the mixture layer, the polysaccharide can effectively capture the metal component eluted from the electrode active material by repeating charging and discharging of the secondary battery, such that the deterioration of the charge and discharge cycle characteristics of the secondary battery can be suppressed.

The particle diameter of the polysaccharide is, for example, preferably greater than or equal to 1 µm and less than or equal to 100 µm, and more preferably, greater than or equal to 5 µm and less than or equal to 30 µm, in terms of effectively suppressing the deterioration of the charge and discharge cycle characteristics of the secondary battery.

The particle diameter of the polysaccharide is determined as follows. A surface of the electrode for a secondary battery is observed with a scanning electron microscope (SEM). Then, 30 polysaccharide particles are randomly selected from an SEM image of the electrode surface. Grain boundaries of the selected 30 particles are observed, an outer shape of the particle is specified, a major diameter (the longest diameter) of each of the 30 particles is determined, and an average value thereof is taken as the particle diameter of the polysaccharide. Note that, in a case where the polysaccharide constitutes secondary particles, the particles are replaced with the secondary particles.

A content of the polysaccharide is, for example, preferably greater than or equal to 0.1 mass% and less than or equal to 2 mass%, and more preferably greater than or equal to 0.1 mass% and less than or equal to 1 mass%, with respect to a mass of the mixture layer excluding the polysaccharide, in terms of suppressing the deterioration of the charge and discharge cycle characteristics of the secondary battery.

In a case where the electrode for a secondary battery is applied to the positive electrode 11, for example, a Li-containing transition metal oxide or the like is used as the electrode active material (that is, the positive electrode active material) containing a metal element constituting the mixture layer (that is, the positive electrode mixture layer). Examples of the metal element contained in the Li-containing transition metal oxide include Ni, Co, Mn, Al, B, Mg, Ti, V, Cr, Fe, Cu, Zn, Ga, Sr, Zr, Nb, In, Sn, Ta, and W. Among them, it is preferable to contain at least one of Ni, Co, and Mn. It is preferable that the Li-containing transition metal oxide has a layered structure, a ratio (B/A) of the number of moles (B) of Li to the total number of moles (A) of the metal element other than Li is greater than or equal to 1, and a ratio (C/A) of the number of moles (C) of Ni to the total number of moles (A) of the metal element other than Li is greater than or equal to 0.5, in terms of increasing the capacity of the secondary battery. Examples of the layered structure of the Li-containing transition metal oxide include a layered structure belonging to space group R-3m and a layered structure belonging to space group C2/m. Among them, the layered structure belonging to the space group R-3m is preferable in terms of high capacity, stability of the layered structure, and the like.

In a case where the electrode for a secondary battery is applied to the negative electrode 12, examples of the electrode active material (that is, the negative electrode active material) containing a metal element constituting the mixture layer (that is, the negative electrode mixture layer) include a Li-containing metal oxide such as lithium titanate (Li₄Ti₅O₁₂ or the like), and a Li-containing nitride such as lithium cobalt nitride, lithium iron nitride, or lithium manganese nitride. In a case where a negative electrode active material containing no metal element is used as the negative electrode active material, metal elution from the negative electrode active material is hardly considered, and thus, it is not necessary to apply the electrode for a secondary battery according to the present embodiment to the negative electrode 12. Note that examples of the negative electrode active material containing no metal element include carbon materials such as artificial graphite, natural graphite, hard carbon, soft carbon, carbon nanotubes, and activated carbon.

The particle diameter of the electrode active material may be smaller than the particle diameter of the polysaccharide, and for example, the particle diameter of the positive electrode active material is preferably greater than or equal to 1 µm and less than or equal to 30 µm, and more preferably greater than or equal to 3 µm and less than or equal to 20 µm, and the particle diameter of the negative electrode active material is preferably greater than or equal to 1 µm and less than or equal to 30 µm, and more preferably greater than or equal to 3 µm and less than or equal to 20 µm. The particle diameter of the electrode active material is measured in the same manner as in the measurement of the particle diameter of the polysaccharide.

The mixture layer may contain a conductive agent, and examples of the conductive agent include carbon materials such as carbon black, acetylene black, Ketjenblack, graphite, and carbon nanotubes. A particle diameter of the conductive agent is preferably smaller than the particle diameter of the polysaccharide, for example, in terms of securing a conductive path in the electrode. The particle diameter of the conductive agent is, for example, greater than or equal to 1 nm and less than or equal to 1,000 nm. The particle diameter of the conductive agent is measured in the same manner as in the measurement of the particle diameter of the polysaccharide.

An example of a method for producing an electrode for a secondary battery will be described. The method for producing an electrode for a secondary battery includes a first step of kneading an electrode active material containing a metal element, a water-insoluble additive, a water-soluble additive containing a polysaccharide having a particle diameter larger than that of the electrode active material, and the like, in a non-aqueous solvent to prepare a paste; and a second step of applying the paste to a current collector to form a mixture layer. In the related art, it has been known to use a polysaccharide as a binder by dissolving the polysaccharide in an aqueous solvent. However, in a case where the polysaccharide is added to and mixed with a non-aqueous solvent without being dissolved in an aqueous solvent as in the present embodiment, it is considered that the polysaccharide does not function as a binder.

Examples of the non-aqueous solvent used when obtaining the paste include N-methyl-2-pyrrolidone (NMP). In addition, the kneading of the raw materials when obtaining the paste is performed by, for example, a cutter mill, a pin mill, a bead mill, a fine particle composing machine (a device in which a shear force is generated between a specially shaped rotor rotating at a high speed inside a tank and a collision plate), a granulator, and a kneading machine such as a twin-screw extruder or a planetary mixer.

A slit die coater, a reverse roll coater, a lip coater, a blade coater, a knife coater, a gravure coater, a dip coater, or the like is used for applying the paste.

In the second step, it is preferable to heat and dry the mixture layer after applying the paste to the current collector. In addition, it is preferable to roll the mixture layer with a rolling roller or the like. For example, a roll press machine or the like is used for rolling the mixture layer.

### EXAMPLES

Hereinafter, the present disclosure will be further described with reference to Examples. However, the present disclosure is not limited to these Examples.

### <Example 1>

### [Manufacture of positive electrode]

A Li-containing transition metal oxide represented by LiNi_{0.5}Mn_{0.5}O₂, acetylene black, polyvinylidene fluoride, and gum arabic (GA) were kneaded in N-methyl-2-pyrrolidone (NMP) so that a mass ratio was 92:5:3:0.5 to prepare a positive electrode paste. The positive electrode paste was applied to an aluminum foil, the coating film was dried, and then the coating film was rolled with a roller, thereby producing a positive electrode in which a positive electrode mixture layer was formed on a positive electrode current collector.

### [Preparation of non-aqueous electrolytic solution]

LiPF₆ was dissolved in a mixed solvent obtained by mixing fluoroethylene carbonate (FEC), ethylene carbonate (EC), and ethyl methyl carbonate (EMC) at a volume ratio of 1:3:6 at a concentration of 1 mol/L, thereby preparing a non-aqueous electrolytic solution.

### [Manufacture of test cell]

An electrode assembly in which a positive electrode and a lithium metal negative electrode were stacked so as to face each other with a separator interposed therebetween, and the non-aqueous electrolytic solution were housed in a coin-shaped case body, and an opening of the coin-shaped case body was sealed with a gasket and a sealing assembly, thereby producing a test cell.

### <Example 2>

A test cell was produced in the same manner as that of Example 1, except that a Li-containing transition metal oxide represented by LiNi_{0.5}Mn_{0.5}O₂, acetylene black, polyvinylidene fluoride, and gum arabic (GA) were kneaded in N-methyl-2-pyrrolidone (NMP) so that a mass ratio was 92:5:3:1.

### <Example 3>

A test cell was produced in the same manner as that of Example 1, except that the gum arabic (GA) was changed to guar gum (GG).

### <Example 4>

A test cell was produced in the same manner as that of Example 1, except that the gum arabic (GA) was changed to carboxymethyl cellulose ammonium (CMC).

### <Example 5>

A test cell was produced in the same manner as that of Example 1, except that a Li-containing transition metal oxide represented by LiNi_{0.5}Mn_{0.5}O₂, acetylene black, polyvinylidene fluoride, gum arabic (GA), and xanthan gum (XG) were kneaded in N-methyl-2-pyrrolidone (NMP) so that a mass ratio was 92:5:3:0.25:0.25.

### <Example 6>

A test cell was produced in the same manner as that of Example 5, except that the xanthan gum (XG) was changed to guar gum (GG).

### <Example 7>

A test cell was produced in the same manner as that of Example 1, except that the gum arabic (GA) was changed to kappa-type carrageenan (k-Car).

### <Example 8>

A test cell was produced in the same manner as that of Example 1, except that the gum arabic (GA) was changed to iota-type carrageenan (i-Car).

### <Comparative Example 1>

A test cell was produced in the same manner as that of Example 1, except that gum arabic (GA) was not used.

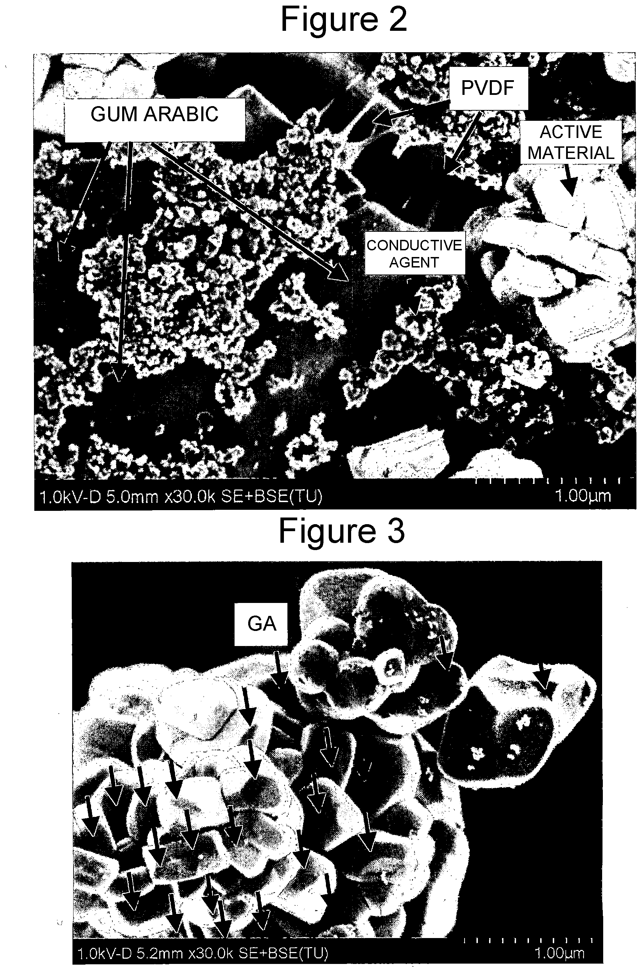

FIG. 2 illustrates an SEM image of a surface of a positive electrode used in Example 2. As illustrated in FIG. 2, it was confirmed that the particle diameter of the gum arabic was larger than the particle diameter of the positive electrode active material. Note that, although not illustrated in the drawings, it was confirmed from the SEM image showing that the particle diameter of the polysaccharide was larger than the particle diameter of the positive electrode active material in other Examples.

### [Charge and discharge cycle test A]

The test cell of each of Examples and Comparative Example 1 was subjected to constant current charge at a constant current of 0.1 C under a condition of 25°C until the voltage reached 4.7 V, and then the test cell was subjected to constant voltage charge at a voltage of 4.7 V until the current value reached 0.05 C. After the battery cell was rested for 20 minutes, the battery cell was subjected to constant current discharge at a constant current of 0.1 C to 2.5 V and then rested for 20 minutes. The charging and discharging (hereinafter, referred to as 0.1 C charging and discharging) were performed by one cycle. Next, the battery cell was subjected to constant current charge at a constant current of 0.2 C to 4.7 V, and then the battery cell was subjected to constant voltage charge at a voltage of 4.7 V until the current value reached 0.1 C. After the battery cell was rested for 20 minutes, the battery cell was subjected to constant current discharge at a constant current of 0.2 C to 2.5 V and then rested for 20 minutes. The charging and discharging (hereinafter, referred to as 0.2 C charging and discharging) were performed by 25 cycles. Next, 0.1 C charging and discharging were performed by one cycle, 0.2 C charging and discharging were performed by 25 cycles, and finally, 0.1 C charging and discharging were performed by one cycle. The total number of charge and discharge cycles is 53 cycles.

### [Measurement of metal elution amount]

After the charge and discharge cycle test A was performed, the test cell was disassembled, and the negative electrode and the separator were taken out and dissolved in HCl. The amount of the transition metal in the solution dissolved in HCl was measured by inductively coupled plasma (ICP-OES analyzer manufactured by Thermo Fisher Scientific Inc.: iCAP7400ICP-OES) measurement, and was taken as the amount of metal eluted from the positive electrode active material. The results of the measured metal elution amount are summarized in Table 1.

**[Table 1]**

| | Polysaccharide | | Metal elution amount |
|---|---|---|---|
| | Type | Content | µg |
| Comparative Example 1 | - | 0 | 11900 |
| Example 1 | GA | 0.5wt% | 8700 |
| Example 2 | GA | 1wt% | 9200 |
| Example 3 | GG | 0.5wt% | 9000 |
| Example 4 | CMC | 0.5wt% | 10100 |
| Example 5 | GA+XG | 0.25wt%+0.25wt% | 9600 |
| Example 6 | GA+GG | 0.25wt%+0.25wt% | 11000 |
| Example 7 | k-Car | 0.5wt% | 9500 |
| Example 8 | i-Car | 0.5wt% | 8100 |

In the test cells of Examples 1 to 8, the metal elution amount was suppressed as compared with Comparative Example 1. From these results, it can be said that in Examples 1 to 8 in which the polysaccharide having a particle diameter larger than that of the positive electrode active material is contained, the metal elution amount can be suppressed as compared with Comparative Example 1 in which a polysaccharide is not contained.

### <Example 9-1>

A test cell was produced in the same manner as that of Example 1, except that a Li-containing transition metal oxide represented by LiNi_{0.5}Mn_{0.5}O₂, acetylene black, polyvinylidene fluoride, and guar gum (GG) were kneaded in N-methyl-2-pyrrolidone (NMP) so that a mass ratio was 92:5:3:0.1.

### <Examples 9-2 to 9-7>

In Examples 9-2 to 9-7, test cells were produced in the same manner as that of Example 9-1, except that the guar gum (GG) of Example 9-1 was changed to xanthan gum (XG), locust bean gum (LBG), gum arabic (GA), carboxymethyl cellulose ammonium (CMC), kappa-type carrageenan (k-Car), and iota-type carrageenan (i-Car).

### <Examples 10-1 to 10-3>

In Examples 10-1 to 10-3, test cells were produced in the same manner as that of Example 1, except that the gum arabic of Example 1 was changed to carboxymethyl cellulose ammonium (CMC), kappa-type carrageenan (k-Car), and iota-type carrageenan (i-Car).

### <Examples 11-1 to 11-3>

In Examples 11-1 to 11-3, test cells were produced in the same manner as that of Example 2, except that the gum arabic of Example 2 was changed to carboxymethyl cellulose ammonium (CMC), kappa-type carrageenan (k-Car), and iota-type carrageenan (i-Car).

The charge and discharge cycle test A was performed on Example 1, Example 2, Examples 9-1 to 9-7, Examples 10-1 to 10-3, Examples 11-1 to 11-3, and Comparative Example 1 and the capacity retention rate was calculated. The results are summarized in Table 2. Capacity retention rate (%) = (discharge capacity at 53th cycle/discharge capacity at 1st cycle) × 100

**[Table 2]**

| | Polysaccharide | | 53 cyc. capacity retention rate |
|---|---|---|---|
| | Type | Content | % |
| Example 9-1 | GG | 0.1wt% | 87.6 |
| Example 9-2 | XG | 0.1wt% | 90.3 |
| Example 9-3 | LBG | 0.1 wt% | 90.1 |
| Example 9-4 | GA | 0.1wt% | 91.4 |
| Example 9-5 | CMC | 0.1 wt% | 90.2 |
| Example 9-6 | k-Car | 0.1wt% | 90.8 |
| Example 9-7 | i-Car | 0.1wt% | 91.4 |
| Example 1 | GA | 0.5wt% | 90.9 |
| Example 10-1 | CMC | 0.5wt% | 90.0 |
| Example 10-2 | k-Car | 0.5wt% | 90.6 |
| Example 10-3 | i-Car | 0.5wt% | 91.1 |
| Example 2 | GA | 1wt% | 90.6 |
| Example 11-1 | CMC | 1wt% | 90.1 |
| Example 11-2 | k-Car | 1wt% | 89.5 |
| Example 11-3 | i-Car | 1wt% | 88.0 |
| Comparative Example 1 | - | 0 | 87.3 |

The capacity retention rates of the test cells of Examples 1 and 2, Examples 9-1 to 9-7, Examples 10-1 to 10-3, and Examples 11-1 to 11-3 were all higher than the capacity retention rate of the test cell of Comparative Example 1. From these results, it can be said that in Examples in which the polysaccharide having a particle diameter larger than that of the positive electrode active material is contained, the deterioration of the charge and discharge cycle characteristics can be suppressed as compared with Comparative Example in which a polysaccharide is not contained.

### <Comparative Example 2>

0.25 parts by mass of gum arabic (GA) was completely dissolved in water. 92 parts by mass of LiNi_{0.5}Co_{0.2}Mn_{0.3}O₂ as a positive electrode active material was added to and mixed with the solution, and then moisture was evaporated by a hot air dryer, thereby obtaining a dried product.

FIG. 3 is an SEM image showing the dried product of Comparative Example 2. As illustrated in FIG. 3, it was confirmed that gum arabic having a particle diameter smaller than the particle diameter of the positive electrode active material was attached to the particle surface of the positive electrode active material.

92.5 parts by mass of the dried product, 5 parts by mass of acetylene black, and 3 parts by mass of polyvinylidene fluoride were added to N-methyl-2-pyrrolidone (NMP), and then the mixture was kneaded, thereby preparing a positive electrode paste. A test cell was produced in the same manner as that of Example 1, except that the positive electrode paste was used.

### <Example 12>

A test cell was produced in the same manner as that of Example 1, except that a Li-containing transition metal oxide represented by LiNi_{0.5}Co_{0.2}Mn_{0.3}O₂, acetylene black, polyvinylidene fluoride, and gum arabic (GA) were kneaded in N-methyl-2-pyrrolidone (NMP) so that a mass ratio was 92:5:3:0.25. Note that, although not illustrated, when the surface of the positive electrode of Example 12 was observed with an SEM, the particle diameter of the gum arabic was larger than the particle diameter of the positive electrode active material.

### [Charge and discharge cycle test B]

The test cell of each of Example 12 and Comparative Example 2 was subjected to constant current charge at a constant current of 0.2 C under a condition of 50°C until the voltage reached 4.5 V, and then the test cell was subjected to constant voltage charge at a voltage of 4.5 V until the current value reached 0.02 C. After the battery cell was rested for 20 minutes, the battery cell was subjected to constant current discharge at a constant current of 0.1 C to 2.5 V and then rested for 20 minutes. The charging and discharging were performed by 40 cycles, and the capacity retention rate was calculated by the following equation. Capacity retention rate (%) = (discharge capacity at 40th cycle/discharge capacity at 1st cycle) × 100

The capacity retention rate of the test cell of Example 12 was 95.6%. On the other hand, the capacity retention rate of the test cell of Comparative Example 2 was 94.4%. From these results, it can be said that in Example 12 in which the polysaccharide having a particle diameter larger than that of the positive electrode active material is contained, the deterioration of the charge and discharge cycle characteristics can be suppressed as compared with Comparative Example 2 in which the polysaccharide having a particle diameter smaller than that of the positive electrode active material is contained.

### <Comparative Example 3>

0.5 parts by mass of gum arabic (GA) was completely dissolved in water. 92 parts by mass of LiNi_{0.5}Mn_{0.5}O₂ as a positive electrode active material was added to and mixed with the solution, and then moisture was evaporated by a hot air dryer, thereby obtaining a dried product. A test cell was produced using the dried product in the same manner as that of Comparative Example 2. When the dried product of Comparative Example 3 was observed with an SEM, gum arabic having a particle diameter smaller than the particle diameter of the positive electrode active material was attached to the particle surface of the positive electrode active material.

### <Comparative Example 4>

1 part by mass of gum arabic (GA) was completely dissolved in water. 92 parts by mass of LiNi_{0.5}Mn_{0.5}O₂ as a positive electrode active material was added to and mixed with the solution, and then moisture was evaporated by a hot air dryer, thereby obtaining a dried product. A test cell was produced using the dried product in the same manner as that of Comparative Example 2. When the dried product of Comparative Example 4 was observed with an SEM, gum arabic having a particle diameter smaller than the particle diameter of the positive electrode active material was attached to the particle surface of the positive electrode active material.

The test cells of Comparative Examples 3 and 4 were charged and discharged for 53 cycles under the conditions of the charge and discharge cycle test A. The capacity retention rate at this time was determined to be 88.1% in Comparative Example 3 and 89.9% in Comparative Example 4. Here, the results of the capacity retention rates of Examples 1 and 2 and Comparative Examples 1, 3, and 4 showed that the capacity retention rate was the highest in Examples 1 and 2 in which gum arabic having a particle diameter larger than that of the positive electrode active material was contained, was the next highest in Comparative Examples 3 and 4 in which gum arabic having a particle diameter smaller than that of the positive electrode active material was contained, and was the lowest in Comparative Example 1 in which gum arabic was not contained.

### <Example 13>

A test cell was produced in the same manner as that of Example 1, except that a Li-containing transition metal oxide represented by LiNi_{0.8}Mn_{0.2}O₂, acetylene black, polyvinylidene fluoride, and gum arabic (GA) were kneaded in N-methyl-2-pyrrolidone (NMP) so that a mass ratio was 92:5:3:0.1.

### <Example 14>

A test cell was produced in the same manner as that of Example 1, except that a Li-containing transition metal oxide represented by LiNio.₈Mno.₂0₂, acetylene black, polyvinylidene fluoride, and gum arabic (GA) were kneaded in N-methyl-2-pyrrolidone (NMP) so that a mass ratio was 92:5:3:0.5.

### <Example 15>

A test cell was produced in the same manner as that of Example 1, except that a Li-containing transition metal oxide represented by LiNi_{0.8}Mn_{0.2}O₂, acetylene black, polyvinylidene fluoride, and gum arabic (GA) were kneaded in N-methyl-2-pyrrolidone (NMP) so that a mass ratio was 92:5:3:1.

### <Comparative Example 5>

A test cell was prepared in the same manner as that of Example 13, except that gum arabic (GA) was not added.

When the surfaces of the positive electrodes of Examples 13 to 15 were observed with an SEM, all the particle diameters of the gum arabics were larger than the particle diameter of the positive electrode active material.

### [Charge and discharge cycle test C]

The test cell of each of Examples 13 to 15 and Comparative Example 5 was subjected to constant current charge at a constant current of 0.1 C under a condition of 25°C until the voltage reached 4.7 V, and then the test cell was subjected to constant voltage charge at a voltage of 4.7 V until the current value reached 0.05 C. After the battery cell was rested for 20 minutes, the battery cell was subjected to constant current discharge at a constant current of 0.1 C to 2.5 V and then rested for 20 minutes. The charging and discharging (hereinafter, referred to as 0.1 C charging and discharging) were performed by one cycle. Next, the battery cell was subjected to constant current charge at a constant current of 0.2 C to 4.7 V, and then the battery cell was subjected to constant voltage charge at a voltage of 4.7 V until the current value reached 0.1 C. After the battery cell was rested for 20 minutes, the battery cell was subjected to constant current discharge at a constant current of 0.2 C to 2.5 V and then rested for 20 minutes. The charging and discharging were performed by 25 cycles. Next, 0.1 C charging and discharging were performed by one cycle. The total number of charge and discharge cycles is 27 cycles.

The charge and discharge cycle test C was performed on the test cells of Examples 13 to 15 and Comparative Example 5, and the capacity retention rate was calculated by the following equation. Capacity retention rate (%) = (discharge capacity at 27th cycle/discharge capacity at 1st cycle) × 100

The capacity retention rate of Example 13 was 96.3%, the capacity retention rate of Example 14 was 96.3%, the capacity retention rate of Example 15 was 95.7%, and the capacity retention rate of Comparative Example 5 was 94.4%. From these results, it can be said that in Examples in which the polysaccharide having a particle diameter larger than that of the positive electrode active material is contained, the deterioration of the charge and discharge cycle characteristics can be suppressed as compared with Comparative Example in which a polysaccharide is not contained.

### REFERENCE SIGNS LIST

- 10: Secondary battery
- 11: Positive electrode
- 12: Negative electrode
- 13: Separator
- 14: Electrode assembly
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. An electrode for a secondary battery, comprising: a current collector; and a mixture layer provided on the current collector,
wherein the mixture layer contains an electrode active material containing a metal element, a water-insoluble additive, and a water-soluble additive,
the water-soluble additive contains a polysaccharide, and
a particle diameter of the polysaccharide is larger than a particle diameter of the electrode active material.

2. The electrode for a secondary battery according to claim 1, wherein the water-insoluble additive includes a fluorine-based resin.

3. The electrode for a secondary battery according to claim 2, wherein the fluorine-based resin includes polyvinylidene fluoride (PVdF).

4. The electrode for a secondary battery according to any one of claims 1 to 3, wherein a content of the polysaccharide is greater than or equal to 0.1 mass% and less than or equal to 2 mass% with respect to a mass of the mixture layer excluding the polysaccharide.

5. The electrode for a secondary battery according to claim 4, wherein the content of the polysaccharide is greater than or equal to 0.1 mass% and less than or equal to 1 mass% with respect to the mass of the mixture layer excluding the polysaccharide.

6. The electrode for a secondary battery according to any one of claims 1 to 5, wherein the polysaccharide includes at least one of a polysaccharide having a carboxyl group and a polysaccharide having a sulfone group.

7. The electrode for a secondary battery according to claim 6, wherein the polysaccharide includes at least one of gum arabic and carrageenan.

8. The electrode for a secondary battery according to any one of claims 1 to 7, wherein the electrode active material is a positive electrode active material.

9. The electrode for a secondary battery according to claim 8, wherein the positive electrode active material is a Li-containing transition metal oxide having a layered structure, a ratio (B/A) of the number of moles (B) of Li to the total number of moles (A) of the metal element other than Li is greater than or equal to 1, and a ratio (C/A) of the number of moles (C) of Ni to the total number of moles (A) of the metal element other than Li is greater than or equal to 0.5.

10. A method for producing an electrode for a secondary battery, the method comprising:
kneading an electrode active material containing a metal element, a water-insoluble additive, and a water-soluble additive containing a polysaccharide having a particle diameter larger than that of the electrode active material in a non-aqueous solvent to prepare a paste; and
applying the paste to a current collector to form a mixture layer.

11. A secondary battery comprising: a positive electrode; and a negative electrode,
wherein at least one of the positive electrode and the negative electrode is the electrode for a secondary battery according to any one of claims 1 to 7.

12. A secondary battery comprising: a positive electrode; and a negative electrode,
wherein the positive electrode is the electrode for a secondary battery according to claim 8 or 9.
